# EUROPEAN PATENT SPECIFICATION

(11) **EP 4 072 094 B1**
(45) Date of publication and mention of the grant of the patent: **19.08.2026**
(21) Application number: 20910527.9
(22) Date of filing: 18.12.2020
(51) Int. Cl.: H04L 41/40, G06F 21/44, G06F 21/57, H04L 41/28, H04L 9/40, H04L 67/1036

(54) **METHOD FOR PROVING TRUSTED STATE AND RELATED DEVICE**
VERFAHREN ZUM NACHWEIS EINES VERTRAUENSWÜRDIGEN ZUSTANDES UND ZUGEHÖRIGE VORRICHTUNG
PROCÉDÉ POUR PROUVER UN ÉTAT DE CONFIANCE ET DISPOSITIF ASSOCIÉ

(30) Priority: 31.12.2019 CN 201911422163
(43) Date of publication of application: 12.10.2022
(73) Proprietor: Huawei Technologies Co., Ltd., Shenzhen, Guangdong 518129 (CN)
(72) Inventor: LE, Weizhi, Shenzhen, Guangdong 518129 (CN); ZHAO, Xiongjun, Shenzhen, Guangdong 518129 (CN)
(74) Representative: Körber, Martin Hans
(86) International application number: PCT/CN2020/137450
(87) International publication number: WO 2021/135978

(56) References cited:
- EP-A1- 3 265 950
- WO-A1-2018/136087
- WO-A1-2018/162060
- CN-A- 101 345 660
- CN-A- 105 760 271
- CN-A- 107 408 183
- CN-A- 109 586 920
- US-A1- 2011 138 475
- US-A1- 2011 145 425
- US-A1- 2019 243 950
- "Network Functions Virtualisation (NFV); Trust; Report on Attestation Technologies and Practices for Secure Deployments", vol. ISG - NFV, no. V1.1.1, 19 October 2017 (2017-10-19), pages 1 - 32, XP014320230, Retrieved from the Internet <URL:http://docbox.etsi.org\ISG\NFV\Open\Publications_pdf\Specs-Reports\NFV-SEC 007v1.1.1 - GR - NFV Attestation report.pdf> [retrieved on 20171019]

## Description

### TECHNICAL FIELD

This application relates to the field of network security technologies, and specifically, to a trusted-state attesting method and a related device.

### BACKGROUND

To resolve a current network security problem, the Trusted Computing Group (trusted computing group, TCG) proposes a trusted computing method. The trusted computing method can attest whether a network device is illegally tampered with or damaged.

However, as networking becomes increasingly complex, an attestation server is connected to a large quantity of network devices. Attestation of trusted states of the large quantity of network devices needs to rely on the attestation server. Consequently, an amount of information that needs to be processed and a burden of the attestation server are increased in a process in which the attestation server attests the trusted states. If the attestation server is illegally tampered with, the network device cannot defend against illegal tampering and damage.

EP 3 265 950 Al discusses device attestation through security hardened management agent. US 2011/145425 Al discloses a trusted network management method based on Trusted Computing Platform Alliance/Trusted Computing Group (TCPA/TCG) trusted network connection.

### SUMMARY

This application provides a trusted-state attesting method and a related device. This application is used to resolve a technical problem about how to reduce an amount of information that needs to be processed in a process in which an attestation server attests a trusted state. The application is set out in the appended set of claims.

According to a first aspect, an embodiment of the present invention provides a trusted-state attesting method, where the method is applied to a network device. The network device is connected between an upstream device and a downstream network device, the upstream device is an upstream network device of the network device or an attestation server, and the method includes: first, measuring a first trusted attestation proxy for the network device to obtain a first proxy measured value, where the first proxy measured value is used to attest a trusted state of the first trusted attestation proxy; subsequently, sending the first proxy measured value to the upstream device; and finally, receiving at least one baseline value from the upstream device, where at least a part of the at least one baseline value is used to attest a trusted state of the downstream network device.

In this implementation, the first trusted attestation proxy in the trusted state is used to undertake attestation of the trusted state of the downstream network device, to effectively reduce an amount of information processed by the attestation server. In addition, in the method, when the attestation server is illegally tampered with or damaged, the first trusted attestation proxy can independently attest the trusted state of the downstream network device, to improve reliability.

In an optional implementation, the network device includes at least one first to-be-attested object connected to the first trusted attestation proxy, and the method further includes: obtaining a first measured value of each of the at least one first to-be-attested object, where the first measured value is used to attest a trusted state of the first to-be-attested object, and the at least one baseline value includes a first baseline value corresponding to the first to-be-attested object, and after the receiving at least one baseline value from the upstream device, the method further includes: attesting the trusted state of the first to-be-attested object based on the first baseline value corresponding to the first to-be-attested object and the first measured value.

In this implementation, the first trusted attestation proxy is responsible for attesting the trusted state of the first to-be-attested object. The amount of information processed by the attestation server is effectively reduced because attestation of the trusted state of each first to-be-attested object does not need to rely on the attestation server. In addition, when the attestation server is attacked, the first trusted attestation proxy can independently attest the trusted state of the first to-be-attested object, to improve reliability.

In an optional implementation, after the obtaining a first measured value of each of the at least first to-be-attested object, the method further includes: sending the first measured value to the upstream device. In this implementation, the first trusted attestation proxy in the trusted state sends the first measured value to the upstream device. The upstream device is responsible for attesting the first to-be-attested object, to effectively reduce an amount of information processed by the first trusted attestation proxy and a burden of the first to-be-attested object.

In an optional implementation, the at least one baseline value includes a second baseline value, the second baseline value corresponds to a second trusted attestation proxy for the downstream network device, and after the receiving at least one baseline value from the upstream device, the method further includes: receiving a second proxy measured value from the downstream network device, where the second proxy measured value is used to attest a trusted state of the second trusted attestation proxy; and attesting the trusted state of the second trusted attestation proxy based on the second baseline value and the second proxy measured value.

In this implementation, the first trusted attestation proxy is responsible for attesting the second trusted attestation proxy, to effectively reduce the amount of information processed by the attestation server and the burden of the attestation server.

In an optional implementation, the method further includes: receiving a second proxy measured value from the downstream network device, where the second proxy measured value is used to attest a trusted state of a second trusted attestation proxy; and sending the second proxy measured value to the upstream device. In this implementation, the upstream device is responsible for attesting the second trusted attestation proxy, to effectively reduce the amount of information processed by the first trusted attestation proxy and the burden of the attestation server.

In an optional implementation, the at least one baseline value includes a third baseline value, the third baseline value corresponds to a second to-be-attested object of the downstream network device, and after the receiving at least one baseline value from the upstream device, the method further includes: receiving a second measured value from the downstream network device, where the second measured value is used to attest a trusted state of the second to-be-attested object; and attesting the trusted state of the second to-be-attested object based on the third baseline value corresponding to the second to-be-attested object and the second measured value.

In this implementation, the first trusted attestation proxy in the trusted state undertakes attestation of the trusted state of the second to-be-attested object, to effectively reduce the amount of information processed by the attestation server and the burden of the attestation server. In addition, efficiency in attesting the second to-be-attested object is effectively improved. A risk of tampering with the second to-be-attested object when the attestation server is illegally tampered with is avoided.

In an optional implementation, the at least one baseline value includes a third baseline value, the third baseline value corresponds to a second to-be-attested object of the downstream network device, and after the receiving at least one baseline value from the upstream device, the method further includes: sending the third baseline value to the downstream network device.

In this implementation, the downstream network device is responsible for undertaking attestation of a trusted state of the second to-be-attested object, to effectively reduce the amount of information processed by and the burden of the first trusted attestation proxy. In addition, this implementation avoids a risk of tampering with the downstream network device when the first trusted attestation proxy is illegally tampered with.

In an optional implementation, the first to-be-attested object and the first trusted attestation proxy are two cards; or the first to-be-attested object and the first trusted attestation proxy are two virtual machines; or the first to-be-attested object and the first trusted attestation proxy are any two of a virtual machine, a network functions virtualization management and orchestration system, or a network functions virtualization infrastructure layer.

According to a second aspect, an embodiment of the present invention provides a trusted-state attesting method, where the method is applied to an upstream device. For a description of the upstream device, refer to the first aspect. Details are not described again. The method includes: first, receiving a first proxy measured value from a network device, where the first proxy measured value is used to attest a trusted state of a first trusted attestation proxy for the network device; subsequently, attesting, based on the first proxy measured value, that the first trusted attestation proxy is in the trusted state; and finally, sending at least one baseline value to the network device, where at least a part of the at least one baseline value is used to attest a trusted state of a downstream network device.

For specific descriptions of processes and beneficial effects shown in this aspect, refer to the first aspect. Details are not described again.

In an optional implementation, the at least one baseline value includes a first baseline value corresponding to a first to-be-attested object of the network device.

In an optional implementation, the method further includes: receiving a first measured value from the network device, where the first measured value is used to attest a trusted state of the first to-be-attested object of the network device; and attesting the trusted state of the first to-be-attested object based on the first baseline value corresponding to the first to-be-attested object and the first measured value.

In an optional implementation, the at least one baseline value includes a second baseline value, and the second baseline value corresponds to a second trusted attestation proxy for the downstream network device.

In an optional implementation, the method further includes: receiving a second proxy measured value from the network device, where the second proxy measured value is used to attest a trusted state of a second trusted attestation proxy for the downstream network device; and attesting the trusted state of the second trusted attestation proxy based on a second baseline value corresponding to the second trusted attestation proxy and the second proxy measured value.

In an optional implementation, the at least one baseline value includes a third baseline value, and the third baseline value corresponds to a second to-be-attested object of the downstream network device.

According to a third aspect, an embodiment of the present invention provides a network device, where the network device includes a first trusted attestation proxy, and the first trusted attestation proxy is configured to perform the trusted-state attesting method shown in the first aspect. For descriptions of specific execution processes and beneficial effects, refer to the first aspect.

According to a fourth aspect, an embodiment of the present invention provides an upstream network device, where the upstream network device includes a trusted attestation proxy, and the trusted attestation proxy is configured to perform the trusted-state attesting method shown in the second aspect. For descriptions of specific execution processes and beneficial effects, refer to the second aspect.

According to a fifth aspect, an embodiment of the present invention provides an attestation server, where the attestation server, a network device, and a downstream network device are sequentially connected, the attestation server includes a processor, a memory, and an optical transceiver, and the processor is separately interconnected with the memory and the optical transceiver by using a line. The optical transceiver is configured to perform transceiver-related operations shown in the second aspect, and the processor is configured to perform processing-related operations shown in the second aspect. For descriptions of specific execution processes and beneficial effects, refer to the second aspect.

According to a sixth aspect, an embodiment of the present invention provides a communication system. The communication system includes an upstream device, a network device, and a downstream network device. The upstream device is shown in the fourth aspect or the fifth aspect, and the network device is shown in the third aspect. Details are not described again.

According to a seventh aspect, an embodiment of the present invention provides a computer-readable storage medium, including instructions. When the instructions are run on a computer, the computer is enabled to perform the method shown in the first aspect or any specific implementation of the first aspect. Details are not described again.

According to an eighth aspect, an embodiment of the present invention provides a computer program product including instructions. When the computer program product runs on a computer, the computer is enabled to perform the method shown in the first aspect or any specific implementation of the first aspect. Details are not described again.

### BRIEF DESCRIPTION OF DRAWINGS

FIG. 1 is a first schematic diagram of a communication architecture to which trusted-state attesting is applied;
FIG. 2 is an example structural diagram of a first embodiment of a network device according to the present invention;
FIG. 3 is an example structural diagram of a second embodiment of a network device according to the present invention;
FIG. 4 is a flowchart of steps in a first embodiment of a trusted-state attesting method according to the present invention;
FIG. 5A and FIG. 5B are a flowchart of steps in a second embodiment of a trusted-state attesting method according to the present invention;
FIG. 6 is a second schematic diagram of a communication architecture to which trusted-state attesting is applied;
FIG. 7 shows an example of a system architecture of a first to-be-attested object according to the present invention;
FIG. 8A and FIG. 8B are a flowchart of steps in a third embodiment of a trusted-state attesting method according to the present invention;
FIG. 9A and FIG. 9B are a flowchart of steps in a fourth embodiment of a trusted-state attesting method according to the present invention; and
FIG. 10 is a structural diagram of an embodiment of an attestation server according to the present invention.

### DESCRIPTION OF EMBODIMENTS

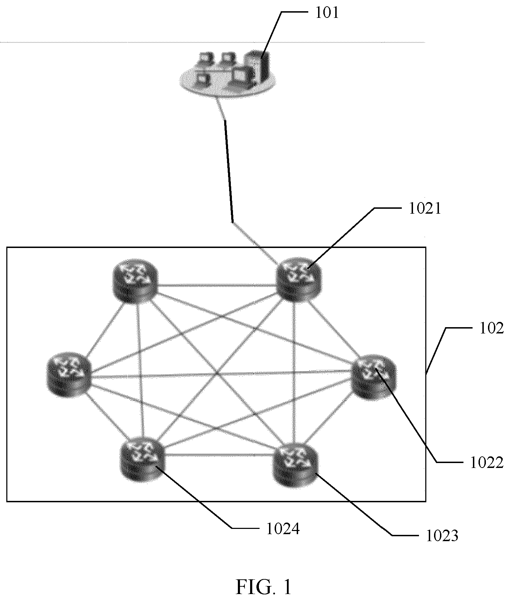

First, an architecture of a communication system to which a trusted-state attesting method provided in this application is applied is described. FIG. 1 is a schematic diagram of a communication architecture to which a trusted-state attesting method is applied. As shown in FIG. 1, the communication system includes an attestation server 101 and a network device cluster 102. The network device cluster 102 includes a plurality of network devices. The attestation server 101 is connected to each network device. The attestation server 101 and each network device that are interconnected exchange information, to attest a trusted state of the network device. The following describes a connection manner between the attestation server 101 and each network device with reference to a specific example.

For example, a network device 1021 included in the network device cluster 102 is directly connected to the attestation server 101. Specifically, the network device 1021 directly creates a transmission control protocol (transmission control protocol, TCP) connection to the attestation server 101. Alternatively, another connection such as an Internet Protocol (internet protocol, IP) connection may be created between the attestation server 101 and the network device 1021. This is not limited in this application.

For another example, a network device 1022 included in the network device cluster 102 is indirectly connected to the attestation server 101. The attestation server 101 and the network device 1022 that are indirectly connected are separated by one or more other network devices. Specifically, the network device 1022 is indirectly connected to the attestation server 101 via the network device 1021. For a description of a connection relationship between the attestation server 101 and another network device included in the network device cluster 102, refer to the description of the network device 1021 or the network device 1022. Details are not described again.

The following describes an internal structure of each network device.

The network device includes at least one to-be-attested object. In this application, for example, the network device includes a plurality of to-be-attested objects. The plurality of to-be-attested objects are separately independently started or run in the network device. In addition, different to-be-attested objects may exchange information in the network device through a backplane bus, inter-process communication, or the like. For better understanding, the following describes an example of a possible implementation of the to-be-attested object.

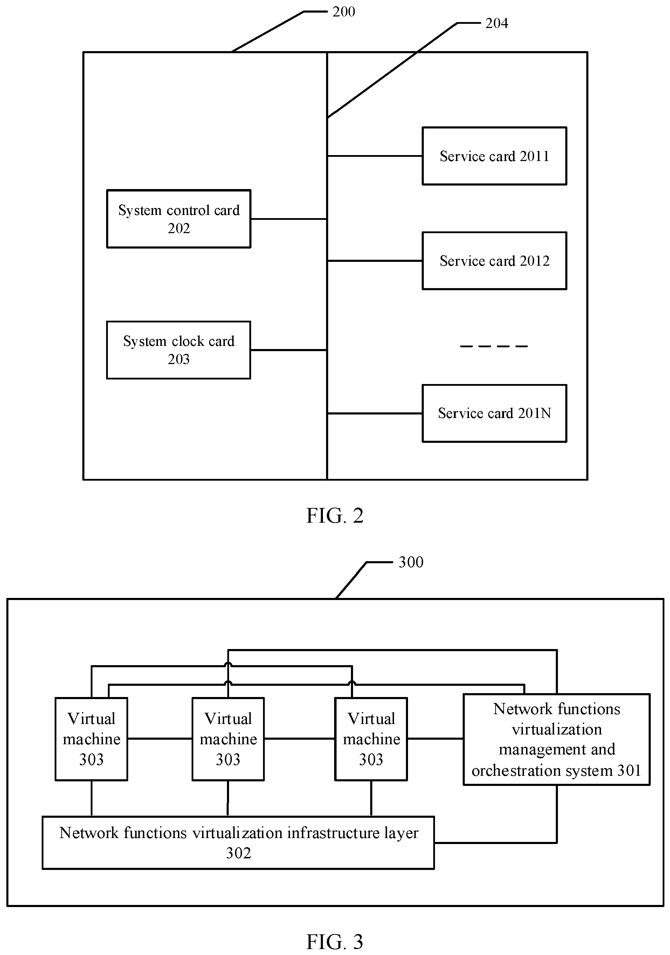

Manner 1: FIG. 2 is an example structural diagram of a first embodiment of a network device according to the present invention. As shown in FIG. 2, a network device 200 includes a plurality of service cards (for example, a service card 2011 and a service card 2012 to a service card 201N). A quantity of service cards shown in FIG. 2 is not limited. The service card 2011 and the service card 2012 to the service card 201N are separately connected to a system control card 202 and a system clock card 203 by using a backplane bus 204. A description of a quantity of system control cards 202 and a quantity of system clock cards 203 shown in FIG. 2 is an optional example, and this is not limited.

The system clock card 203 is configured to perform clock synchronization. The system control card 202 is configured to control a service card. A control manner includes but is not limited to software upgrading or downgrading, service data configuration, alarm collection and reporting, or the like. The service card is configured to process service data. A processing manner includes but is not limited to aggregation, transmission, routing, switching, or the like. The to-be-attested object may be all or a part of all the service cards, the system control card 202, and the system clock card 203.

Manner 2: FIG. 3 is an example structural diagram of a second embodiment of a network device according to the present invention. As shown in FIG. 3, a network device 300 uses a network functions virtualization (network function virtualization, NFV) technology. Decoupling between an application and hardware of the network device 300 is implemented by using NFV. The network device 300 includes an NFV management and orchestration (NFV management and orchestration, NFV MANO) system 301, an NFV infrastructure (NFV Infrastructure, NFVI) layer 302, and a plurality of virtual machines 303. The NFV MANO 301 is separately connected to the NFVI 302 and each virtual machine 303. The NFV MANO 301 is configured to manage the virtual machine 303 and the NFVI 302. The NFVI 302 deploys virtualized resources by using a hardware resource, a software resource, or a combination of a hardware resource and a software resource included in the NFVI 302. The NFVI 302 provides the virtualized resource for the virtual machine 303. The to-be-attested object may be all or a part of all the virtual machines 303, the NFV MANO 301, and the NFVI 302.

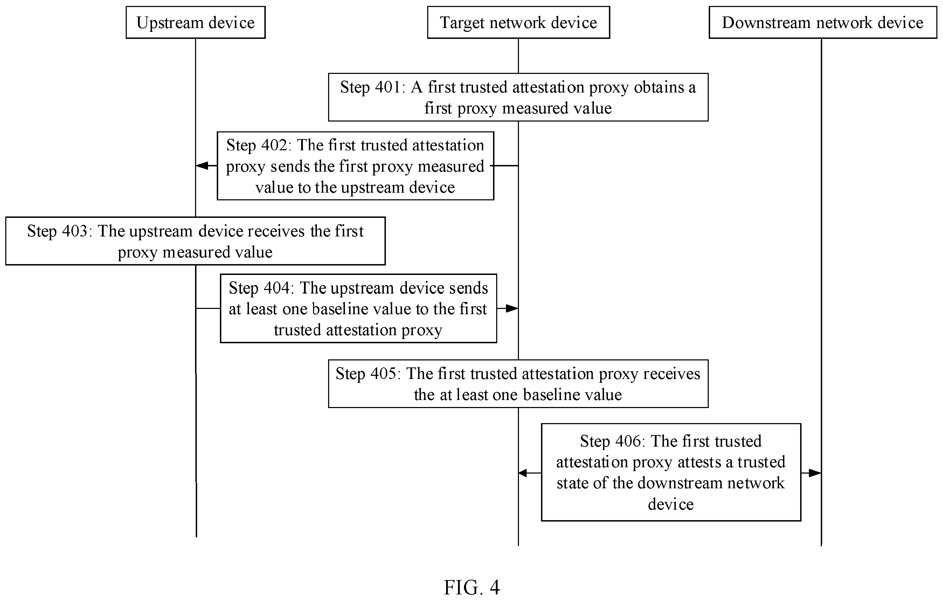

FIG. 4 is a flowchart of steps in a first embodiment of a trusted-state attesting method according to the present invention. With reference to FIG. 4, the following describes a specific execution process of the trusted-state attesting method provided in this application.

Step 401: A first trusted attestation proxy obtains a first proxy measured value.

The first trusted attestation proxy shown in this embodiment is located in a target network device. The first trusted attestation proxy is configured to perform trusted-state attesting. The following first describes a connection location of the target network device in a communication network:
The target network device shown in this embodiment is connected between an upstream device and a downstream network device. The upstream device may be any one of one or more network devices connected between the target network device and an attestation server. Alternatively, the upstream device may be an attestation server. As shown in FIG. 1, an upstream device of a target network device 1023 may be any one of the network device 1022, the network device 1021, and the attestation server 101.

The downstream network device is any one of one or more network devices that need to be indirectly connected to the attestation server via the target network device. For a description of the indirect connection, refer to FIG. 1. Details are not described again. For another example, a downstream network device of the target network device 1023 is a network device 1024.

In a specific implementation, the first trusted attestation proxy may be a service card shown in FIG. 2. In addition, the first trusted attestation proxy and a to-be-attested object are different service cards. For example, the to-be-attested object is the service card 2011 or the service card 2012, while the first trusted attestation proxy is the service card 201N. In this example, alternatively, the to-be-attested object may be the system control card 202 and the system clock card 203.

The first trusted attestation proxy may be a code segment running in the system control card 202. The to-be-attested object is all service cards and the system clock card 203 included in the target network device 200. Alternatively, the first trusted attestation proxy may be a code segment running in the system clock card 203. The to-be-attested object is all service cards and the system control card 202 included in the target network device 200.

In another specific implementation, the first trusted attestation proxy may be a virtual machine shown in FIG. 3. In addition, the first trusted attestation proxy and the to-be-attested object are different virtual machines. The first trusted attestation proxy may be a code segment running in the NFV MANO 301. The to-be-attested object is all virtual machines and the NFVI 302 included in the target network device 300. Alternatively, the first trusted attestation proxy may be a code segment running in the NFVI 302. The to-be-attested object is all virtual machines and the NFV MANO 301 included in the target network device 300.

The first trusted attestation proxy is configured to attest a trusted state of the downstream network device. To ensure accuracy and security of attesting the trusted state, the first proxy measured value needs to be obtained. The first proxy measured value is used to attest a trusted state of the first trusted attestation proxy. The following describes a process of obtaining the first proxy measured value:

The first trusted attestation proxy measures itself to obtain the first proxy measured value. Specifically, for example, the first trusted attestation proxy is a code segment. The first trusted attestation proxy performs a cryptographic operation on the code segment of the entire first trusted attestation proxy to obtain the first proxy measured value. A specific algorithm type of the cryptographic operation is not limited in this embodiment. For example, the cryptographic operation may be hash, symmetric encryption (SM1), and asymmetric encryption (SM2). If the first trusted attestation proxy is the system control card or the NFV MANO 301, the entire first trusted attestation proxy is statically measured or dynamically measured to obtain the first proxy measured value.

Step 402: The first trusted attestation proxy sends the first proxy measured value to an upstream device.

This implementation is described by using an example in which the first trusted attestation proxy directly sends the first proxy measured value to the upstream device. In another example, alternatively, the first trusted attestation proxy may indirectly send the first proxy measured value to the upstream device via another object (for example, a routing card in the network device) in the target network device. This is not specifically limited in this embodiment.

Step 403: The upstream device receives the first proxy measured value.

The upstream device attests, based on the first proxy measured value, whether the first trusted attestation proxy is in a trusted state. Specifically, the upstream device may prestore a first proxy baseline value. The upstream device determines whether the first proxy measured value is consistent with the first proxy baseline value.

If the first proxy measured value is not consistent with the first proxy baseline value, the upstream device determines that the first trusted attestation proxy is in an untrusted state. In an example, the upstream device may send re-attestation information to the first trusted attestation proxy. The re-attestation information is used to indicate the first trusted attestation proxy to re-perform step 401. In another example, the upstream device may generate result indication information, where the result indication information is used to indicate that the first trusted attestation proxy is in an untrusted state. The first trusted attestation proxy is analyzed and processed based on the indication information. If the first proxy measured value is consistent with the first proxy baseline value, the upstream device determines that the first trusted attestation proxy is in a trusted state, and then execution of step 404 is triggered.

Step 404: The upstream device sends at least one baseline value to the first trusted attestation proxy.

At least a part of the at least one baseline value shown in this embodiment is used to attest the trusted state of the downstream network device. Specifically, the at least one baseline value includes a baseline value corresponding to a second trusted attestation proxy for the downstream network device; and/or the at least one baseline value includes a baseline value corresponding to a to-be-attested object of the downstream network device. For a specific description of the second trusted attestation proxy, refer to the description of the first trusted attestation proxy shown in step 401. Details are not described again.

Step 405: The first trusted attestation proxy receives the at least one baseline value.

The first trusted attestation proxy determines, based on the at least one baseline value, that the first trusted attestation proxy is in a trusted state.

Step 406: The first trusted attestation proxy attests the trusted state of the downstream network device.

The first trusted attestation proxy in the trusted state attests the trusted state of the downstream network device. Specifically, the first trusted attestation proxy attests a trusted state of the second trusted attestation proxy based on the at least one baseline value; and/or the first trusted attestation proxy attests a trusted state of the to-be-attested object of the downstream network device based on the at least one baseline value.

By using the method shown in this embodiment, the first trusted attestation proxy in the trusted state undertakes attestation of the trusted state of the downstream network device, to effectively reduce an amount of information processed by the attestation server. When the attestation server is illegally tampered with or damaged, the first trusted attestation proxy independently attests the trusted state of the downstream network device, to effectively improve reliability of the downstream network device and accuracy of attesting the trusted state of the downstream network device. In addition, the method avoids a risk of tampering with the downstream network device when the attestation server is illegally tampered with, to effectively improve reliability of the downstream network device.

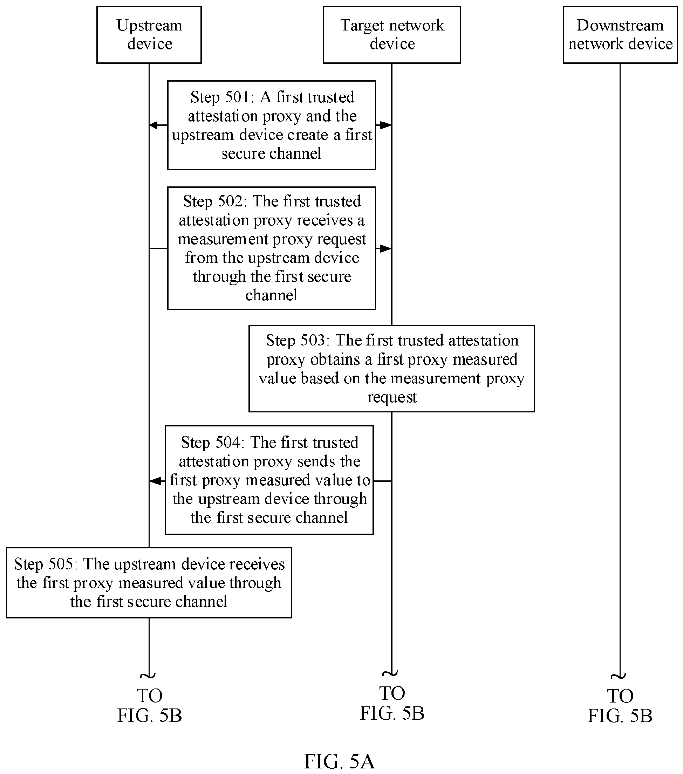

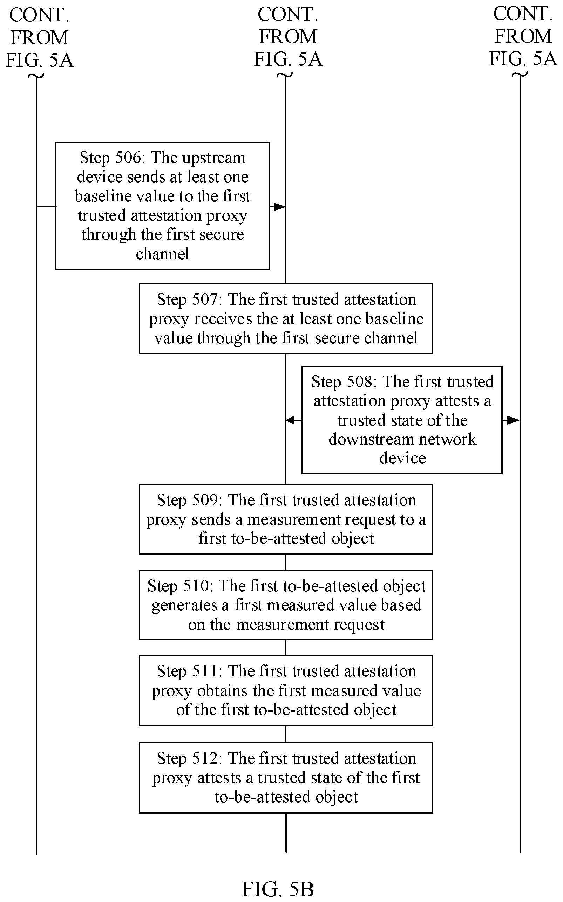

FIG. 5A and FIG. 5B are a flowchart of steps in a second embodiment of a trusted-state attesting method according to the present invention. With reference to FIG. 5A and FIG. 5B, the following describes an example of a process of attesting a trusted state of a to-be-attested object of a target network device. As shown in this embodiment, a first trusted attestation proxy is responsible for attesting the trusted state of the to-be-attested object of the target network device.

Step 501: The first trusted attestation proxy and an upstream device create a first secure channel.

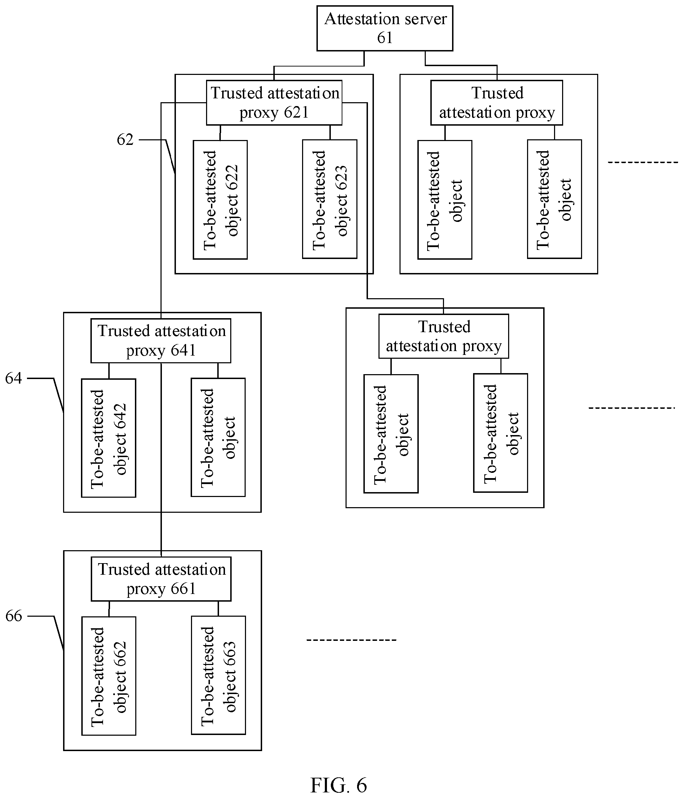

For a description of the upstream device, refer to FIG. 4. Details are not described again. FIG. 6 is a second schematic diagram of a communication architecture to which trusted-state attesting is applied. FIG. 6 is used as an example. The first trusted attestation proxy is a trusted attestation proxy 641 that belongs to a target network device 64. The trusted attestation proxy 641 and a trusted attestation proxy 621 that belongs to an upstream network device 62 create a first secure channel. For another example, the first trusted attestation proxy is a trusted attestation proxy 621 that belongs to a target network device 62. The trusted attestation proxy 621 and an attestation server 61 create a first secure channel.

Security of information exchanged between the first trusted attestation proxy and the upstream device is implemented based on the first secure channel. Specifically, the first trusted attestation proxy and the upstream device perform identity authentication and key agreement with each other based on transport layer security (transport layer security, TLS), Internet Protocol security (internet protocol security, IPsec), key sharing, or the like. The first secure channel is successfully created after identity authentication and key agreement are performed. It can be learned that the first secure channel is an encrypted secure channel.

Step 502: The first trusted attestation proxy receives a measurement proxy request from the upstream device through the first secure channel.

The measurement proxy request is used to indicate the first trusted attestation proxy to measure itself to obtain a proxy measured value. For example, if the target network device is the network device 62, the first trusted attestation proxy 621 receives a measurement proxy request from the attestation server 61 via the first secure channel. For another example, if the target network device is the network device 64, the first trusted attestation proxy 641 receives a measurement proxy request from the trusted attestation proxy 621 via the first secure channel. The first trusted attestation proxy 621 is configured to forward the measurement proxy request from the attestation server 61 to the trusted attestation proxy 641.

Step 503: The first trusted attestation proxy obtains a first proxy measured value based on the measurement proxy request.

Step 504: The first trusted attestation proxy sends the first proxy measured value to the upstream device through the first secure channel.

Step 505: The upstream device receives the first proxy measured value through the first secure channel.

For descriptions of steps 503 to 505, refer to the descriptions of steps 401 to 403 shown in FIG. 4. Details are not described again.

Step 506: The upstream device sends at least one baseline value to the first trusted attestation proxy through the first secure channel.

The at least one baseline value includes a first baseline value corresponding to a first to-be-attested object. The first to-be-attested object is a to-be-attested object included in the target network device. Specifically, the first trusted attestation proxy in the target network device is separately connected to a plurality of first to-be-attested objects.

Step 507: The first trusted attestation proxy receives the at least one baseline value through the first secure channel.

Step 508: The first trusted attestation proxy attests a trusted state of a downstream network device.

For descriptions of step 507 and step 508, refer to the descriptions of step 405 and step 406 shown in FIG. 4. Details are not described again.

Step 509: The first trusted attestation proxy sends a measurement request to the first to-be-attested object.

When the first trusted attestation proxy is in a trusted state, the first trusted attestation proxy obtains a first measured value of each first to-be-attested object by using the measurement request. The first trusted attestation proxy may periodically send the measurement request to the first to-be-attested object, so as to periodically attest a trusted state of the first to-be-attested object. Alternatively, the first trusted attestation proxy may send the measurement request to the first to-be-attested object based on a trigger event. The trigger event may be reset or initial power-on of the first to-be-attested object, or a command entered by network management personnel.

A time sequence of performing step 508 and step 509 shown in this embodiment is not limited.

Step 510: The first to-be-attested object generates a first measured value based on the measurement request.

To attest a trusted state of each first to-be-attested object, each first to-be-attested object needs to generate a first measured value. A specific quantity of first measured values generated by the first to-be-attested object is not limited in this embodiment. Specifically, the first to-be-attested object may include a plurality of subobjects. The first to-be-attested object generates a corresponding first measured value for each subobject. The first measured value corresponding to each subobject is used to attest a trusted state of the subobject. It can be learned that, in this embodiment, the trusted state of the first to-be-attested object is attested by attesting the trusted state of each subobject.

Specifically, the trusted state is attested by statically measuring the first to-be-attested object in a system startup phase. The subobject included in the first to-be-attested object may be a basic input output system (basic input output system, BIOS), an operating system loader (operating system loader, OSLoader), an operating system (operating system, OS), an application started by the OS, and the like.

Then static measurement is performed to attest that the first to-be-attested object is in the trusted state in the system startup phase. Subsequently, the first to-be-attested object is dynamically measured in a system running phase. The subobject included in the first to-be-attested object is a process that is running on the first to-be-attested object.

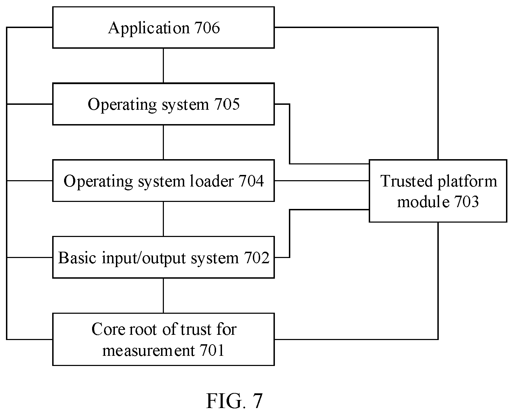

FIG. 7 shows an example of a system architecture of a first to-be-attested object according to the present invention. With reference to FIG. 7, the following describes a process of statically measuring the first to-be-attested object.

The first to-be-attested object includes a core root of trust for measurement (core root of trust for measurement, CRTM) 701. It can be determined, without measurement, that the CRTM 701 is in a trusted state. The CRTM 701 serves as a starting point of a chain of trust for attesting a trusted state of the first to-be-attested object. A specific form of the CRTM 701 is not limited in this embodiment. For example, if the first to-be-attested object is a service card, the CRTM 701 is an independent chip disposed in the first to-be-attested object. The CRTM 701 is a root of trust (root of trust, RoT). For another example, the CRTM 701 may be a segment of hardware-protected code running on the first to-be-attested object.

First, the CRTM 701 is run after the first to-be-attested object is powered on. The run CRTM 701 measures a BIOS 702 as a subobject to obtain a first measured value of the BIOS 702. The CRTM 701 stores the first measured value of the BIOS 702 to a trusted platform module (trusted platform module, TPM) 703. The TPM 703 shown in this embodiment may be an independent TPM chip included in the first to-be-attested object, a firmware TPM module (firmware TPM, fTPM), a virtual trusted platform module (virtual TPM, vTPM), or the like. In addition, the TPM 703 includes independent storage space. The storage space may be a platform configuration register (platform configuration register, PCR).

Subsequently, the BIOS 702 measures an OSLoader 704 as a subobject to obtain a first measured value of the OSLoader 704. The BIOS 702 sends the first measured value of the OSLoader 704 to the TPM 703. Subsequently, before loading an OS 705, the OSLoader 704 measures the OS 705 as a subobject to obtain a first measured value of the OS 705. The OSLoader 704 sends the first measured value of the OS 705 to the TPM 703. After the OS 705 is started, the OS 705 measures an application 706 as a subobject to obtain a first measured value of the application 706. The OS 705 sends the first measured value of the application 706 to the TPM 703.

The first to-be-attested object sends the obtained first measured values to the first trusted attestation proxy. A specific sending manner is not limited in this embodiment. For example, the application 706 accesses the TPM 703 to send the first measured values of the subobjects shown above to the first trusted attestation proxy.

After the first to-be-attested object is statically measured in the system startup phase, the first to-be-attested object may dynamically measure a trusted state of running-state data of the first to-be-attested object. Specifically, the running-state data may be a process that is running on the first to-be-attested object, a code segment and/or a data segment in a memory, or the like. The running-state data is measured to obtain a first measured value of the subobject.

It should be made clear that if the first trusted attestation proxy is an independent system control card, a system clock card, a service card, a virtual machine, an NFV MANO, or an NFVI, the static measurement or dynamic measurement process shown in this embodiment may also be applied to a process of measuring the first trusted attestation proxy.

Step 511: The first trusted attestation proxy obtains the first measured value of the first to-be-attested object.

Step 512: The first trusted attestation proxy attests a trusted state of the first to-be-attested object.

The first trusted attestation proxy attests the trusted state of the first to-be-attested object based on the first baseline value corresponding to the first to-be-attested object and the first measured value. Specifically, the first trusted attestation proxy determines whether a first baseline value corresponding to a subobject is consistent with a first measured value of the subobject. If yes, the first trusted attestation proxy determines that the subobject is in a trusted state. If no, the first trusted attestation proxy determines that the subobject is in an untrusted state.

For example, the target network device is the network device 62. When the first trusted attestation proxy 621 obtains the first baseline value, trusted-state attesting may be performed on a first to-be-attested object 622 and a first to-be-attested object 623 that belong to the target network device 62.

For example, if a trusted state of a BIOS of the first to-be-attested object 622 needs to be attested, the first trusted attestation proxy 621 determines whether a first baseline value corresponding to the BIOS from the attestation server 61 is consistent with a first measured value of the BIOS. If yes, the first trusted attestation proxy 621 determines that the BIOS is in a trusted state. If no, the first trusted attestation proxy 621 determines that the BIOS is in an untrusted state.

In the embodiment shown in FIG. 5A and FIG. 5B, a description is provided by using an example in which the first trusted attestation proxy in the target network device is responsible for attesting the trusted state of the first to-be-attested object. In another example, alternatively, the upstream device may be responsible for attesting the trusted state of the first to-be-attested object. The upstream device responsible for attesting the trusted state of the first to-be-attested object may be a network device directly or indirectly connected to the target network device, or may be the attestation server. This is not specifically limited.

If the upstream device is responsible for attesting the trusted state of the first to-be-attested object, the first trusted attestation proxy forwards the first measured value to the upstream device.

A first trusted attestation proxy 661 that belongs to a target network device 66 sends a first measured value to the attestation server 61 via the network device 64 and the network device 62 in sequence. The attestation server 61 attests a trusted state of a first to-be-attested object 662 and that of a to-be-attested object 663. For another example, the first trusted attestation proxy 661 may directly send the first measured value to the trusted attestation proxy 641. The trusted attestation proxy 641 is responsible for attesting the trusted state of the first to-be-attested object 662 and that of the to-be-attested object 663.

In an example, the first trusted attestation proxy may send indication information to the attestation server. The indication information is used to indicate a trusted state of each first to-be-attested object. In another example, the attestation server may further send a query request to the first trusted attestation proxy. The first trusted attestation proxy sends indication information to the attestation server based on the query request. Thus, the attestation server can find the trusted state of each first to-be-attested object.

As networking becomes complex, the target network device may include a plurality of first to-be-attested objects. By using the method shown in this embodiment, the attestation server does not need to separately perform independent attestation on each first to-be-attested object. Instead, the first trusted attestation proxy for the target network device is directly responsible for attesting the trusted state of the first to-be-attested object. An amount of information processed by the attestation server is effectively reduced because attestation of the trusted state of each first to-be-attested object does not need to rely on the attestation server. In addition, when the attestation server is attacked, the first trusted attestation proxy can independently attest the trusted state of the first to-be-attested object, to improve reliability.

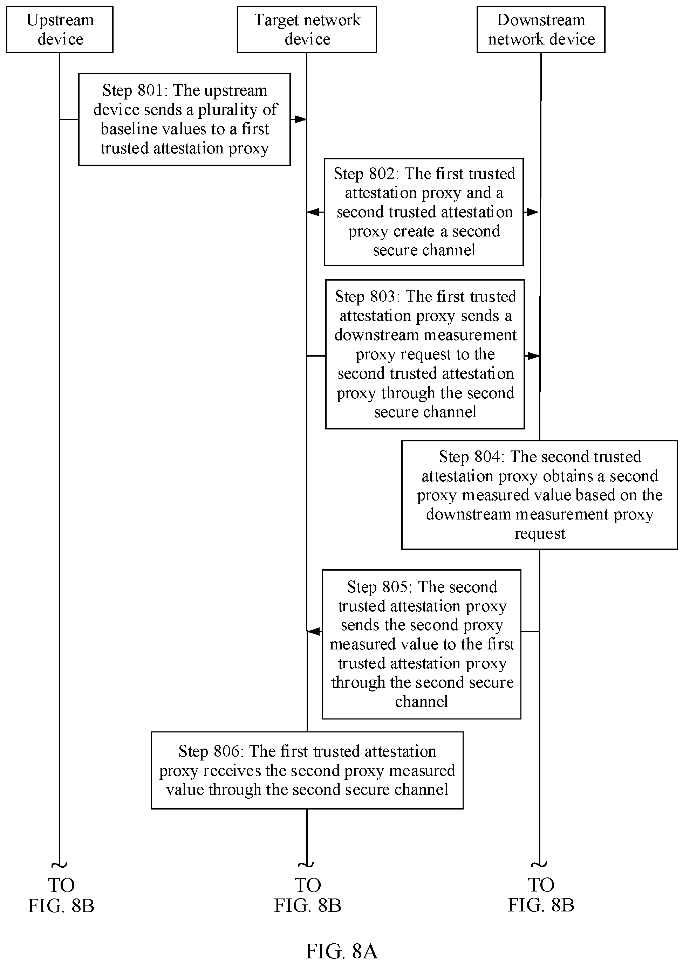

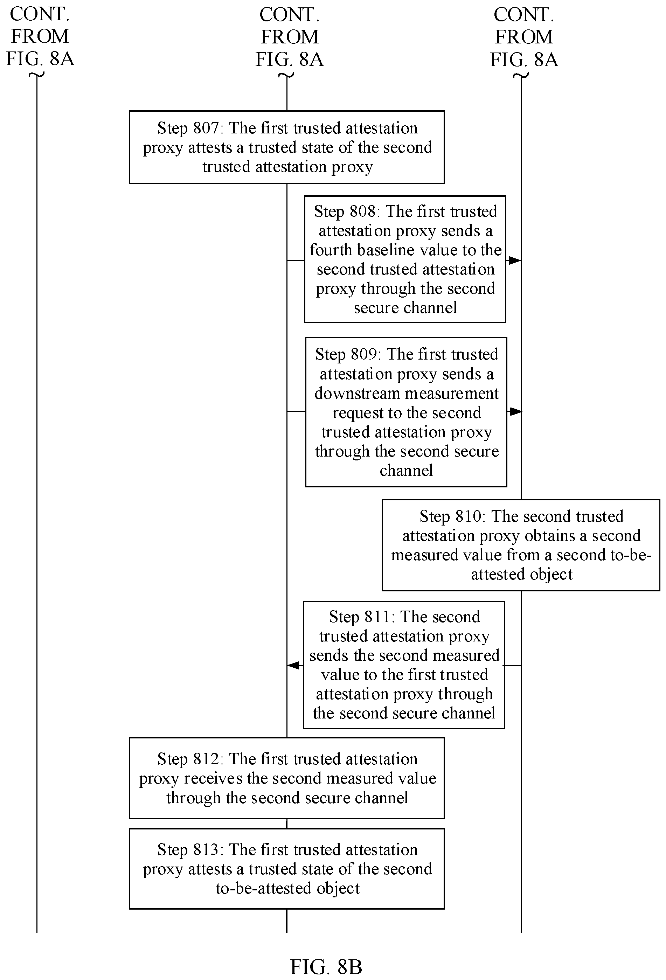

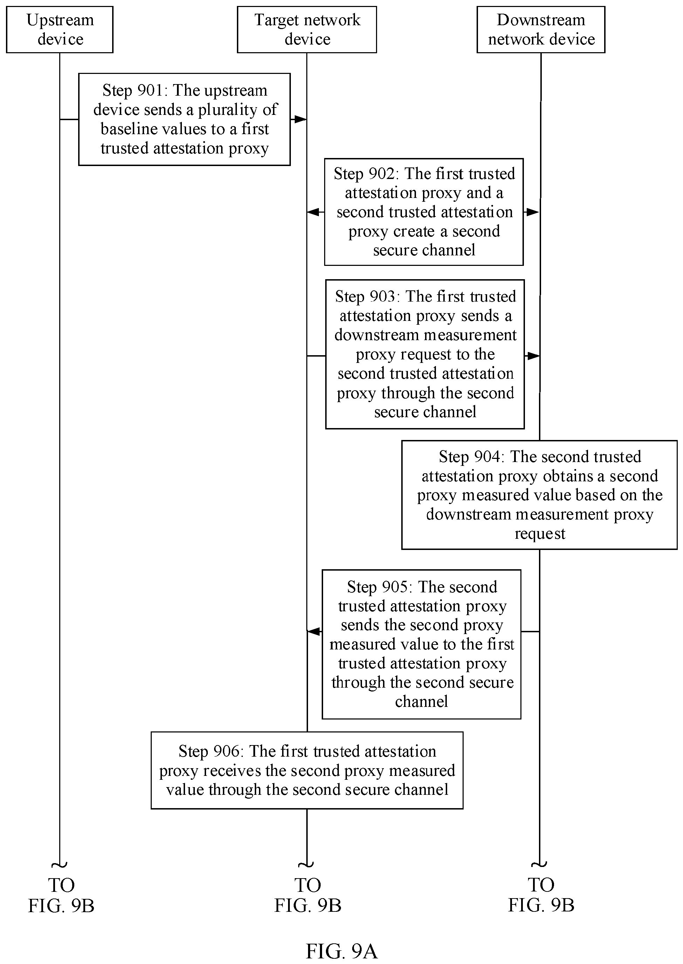

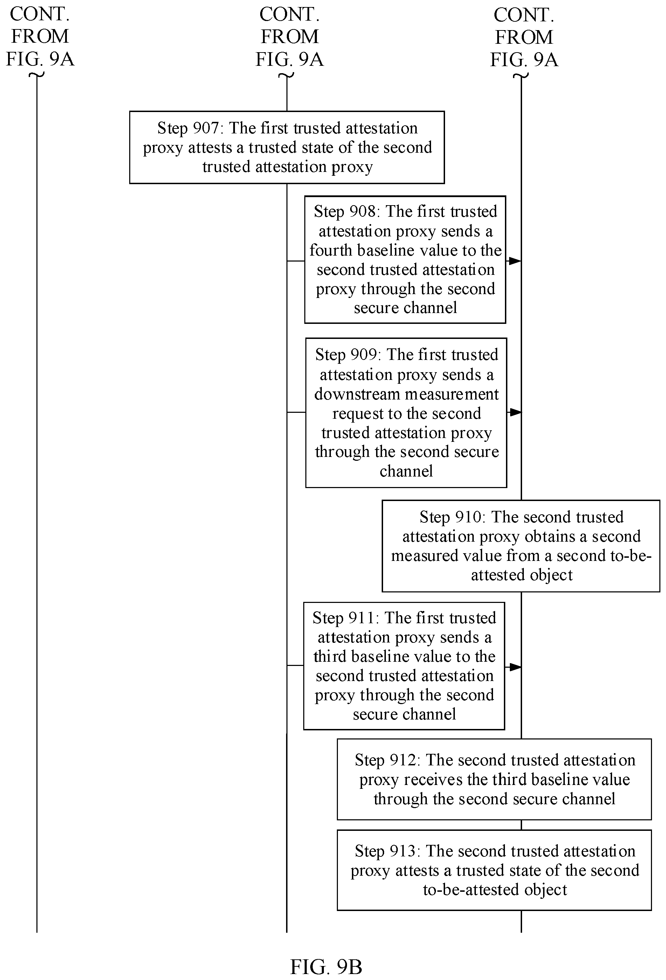

FIG. 8A and FIG. 8B are a flowchart of steps in a third embodiment of a trusted-state attesting method according to the present invention. FIG. 9A and FIG. 9B are a flowchart of steps in a fourth embodiment of a trusted-state attesting method according to the present invention. With reference to FIG. 8A to FIG. 9B, the following describes a process of attesting a trusted state of a downstream network device. The downstream network device includes a second trusted attestation proxy and one or more second to-be-attested objects connected to the second trusted attestation proxy. This embodiment is described by using a plurality of second to-be-attested objects as an example. For a description of the second trusted attestation proxy, refer to the description of the first trusted attestation proxy shown in FIG. 4. Details are not described again. For a specific description of the second to-be-attested object, refer to the description of the first to-be-attested object shown in FIG. 4. Details are not described again.

Step 801: An upstream device sends a plurality of baseline values to a first trusted attestation proxy.

When determining that the first trusted attestation proxy is in a trusted state, the upstream device sends the plurality of baseline values to the first trusted attestation proxy. For a description of a process in which the upstream device determines that the first trusted attestation proxy is in a trusted state, refer to step 501 to step 505 shown in FIG. 5A and FIG. 5B. Details are not described again.

In this embodiment, the first trusted attestation proxy is responsible for attesting a trusted state of a second trusted attestation proxy and that of a second to-be-attested object. The plurality of baseline values include a second baseline value and a third baseline value. The second baseline value corresponds to the second trusted attestation proxy. The third baseline value corresponds to the second to-be-attested object.

Optionally, the upstream device sends the plurality of baseline values to the first trusted attestation proxy based on a subordination relationship. For example, as shown in FIG. 6, the subordination relationship is used to indicate a target network device 64 and a downstream network device 66 subordinate to the target network device 64. In this example, a second baseline value generated by the upstream device corresponds to a second trusted attestation proxy 661. The third baseline value corresponds to second to-be-attested objects 662 and 663.

Step 802: The first trusted attestation proxy and the second trusted attestation proxy create a second secure channel.

For a description of a process in which the first trusted attestation proxy and the second trusted attestation proxy create the second secure channel, refer to the process of creating the first secure channel shown in step 501 in FIG. 5A and FIG. 5B. Details are not described again. Security of information exchanged between the first trusted attestation proxy and the second trusted attestation proxy is ensured through the second secure channel.

A time sequence of performing step 801 and step 802 is not limited.

Step 803: The first trusted attestation proxy sends a downstream measurement proxy request to the second trusted attestation proxy through the second secure channel.

The downstream measurement proxy request is used to request to obtain a second proxy measured value of the second trusted attestation proxy. The second proxy measured value is used to attest the trusted state of the second trusted attestation proxy.

Step 804: The second trusted attestation proxy obtains a second proxy measured value based on the downstream measurement proxy request.

For step 804 shown in this embodiment, refer to step 503 shown in FIG. 5A and FIG. 5B. Details are not described again.

Step 805: The second trusted attestation proxy sends the second proxy measured value to the first trusted attestation proxy through the second secure channel.

Step 806: The first trusted attestation proxy receives the second proxy measured value through the second secure channel.

Step 807: The first trusted attestation proxy attests the trusted state of the second trusted attestation proxy.

It can be learned from step 801 that the first trusted attestation proxy has received the second baseline value. In this case, the first trusted attestation proxy determines whether the second proxy measured value is consistent with the second baseline value.

If yes, it indicates that the second proxy measured value is in a trusted state. If no, it indicates that the second proxy measured value is in an untrusted state. For a description that the second proxy measured value is in an untrusted state, refer to the description that the first trusted attestation proxy is in an untrusted state shown in step 403. Details are not described again.

Step 808: The first trusted attestation proxy sends a fourth baseline value to the second trusted attestation proxy through the second secure channel.

For better understanding, the following provides a description with reference to FIG. 6. The plurality of baseline values received by the first trusted attestation proxy 621 for the target network device 62 from the upstream device (the attestation server 61) may further include a fourth baseline value. The fourth baseline value is used to attest trusted states of the to-be-attested objects (662 and 663) subordinate to the downstream network device 64.

Specifically, the first trusted attestation proxy 621 determines that a second trusted attestation proxy 641 for the downstream network device 64 is in a trusted state. The first trusted attestation proxy 621 may send the fourth baseline value to the second trusted attestation proxy 641.

The second trusted attestation proxy 641 may attest, based on the fourth baseline value, the trusted states of the to-be-attested objects (662 and 663) subordinate to the downstream network device 64. Alternatively, the second trusted attestation proxy may further send the fourth baseline value to the trusted attestation proxy 661 subordinate to the downstream network device 64. The trusted attestation proxy 661 subordinate to the downstream network device 64 attests, based on the fourth baseline value, the to-be-attested objects (662 and 663) subordinate to the downstream network device 64.

In this embodiment, for example, the first trusted attestation proxy is responsible for attesting the trusted state of the second trusted attestation proxy. In another example, alternatively, the upstream device may be responsible for attesting the trusted state of the second trusted attestation proxy. In this example, the first trusted attestation proxy may send the second proxy measured value to the upstream device through a first secure channel. For a description of a process in which the upstream device attests the second trusted attestation proxy, refer to the process in which the first trusted attestation proxy attests the second trusted attestation proxy. Details are not described again. Because the upstream device is responsible for attesting the second trusted attestation proxy, the plurality of baseline values sent by the upstream device to the first trusted attestation proxy do not include the second baseline value.

Step 809: The first trusted attestation proxy sends a downstream measurement request to the second trusted attestation proxy through the second secure channel.

The downstream measurement request is used to obtain a second measured value of each second to-be-attested object. The second trusted attestation proxy forwards the obtained downstream measurement request to each second to-be-attested object. Each second to-be-attested object may perform measurement based on the downstream measurement request to obtain the second measured value. For a specific process in which the second to-be-attested object obtains the second measured value, refer to the process in which the first to-be-attested object obtains the first measured value shown in step 510 shown in FIG. 5A and FIG. 5B. Details are not described again.

A time sequence of performing step 808 and step 809 shown in this embodiment is not limited.

Step 810: The second trusted attestation proxy obtains the second measured value from the second to-be-attested object.

Step 811: The second trusted attestation proxy sends the second measured value to the first trusted attestation proxy through the second secure channel.

Step 812: The first trusted attestation proxy receives the second measured value through the second secure channel.

Step 813: The first trusted attestation proxy attests a trusted state of the second to-be-attested object.

The first trusted attestation proxy attests the trusted state of the second to-be-attested object based on the third baseline value corresponding to the second to-be-attested object and the second measured value. For a specific process, refer to the process of attesting the first to-be-attested object in step 512. Details are not described again.

By using the method shown in this embodiment, the first trusted attestation proxy in the trusted state undertakes attestation of the trusted state of the second trusted attestation proxy and that of the second to-be-attested object, to effectively reduce the amount of information processed by the attestation server. In addition, efficiency in attesting the second trusted attestation proxy and the second to-be-attested object is effectively improved. A risk of tampering with the second trusted attestation proxy and the second to-be-attested object when the attestation server is illegally tampered with is avoided.

With reference to FIG. 9A and FIG. 9B, the following describes another embodiment of a process of attesting a trusted state of a downstream network device.

Step 901: An upstream device sends a plurality of baseline values to a first trusted attestation proxy.

In contrast to the embodiment shown in FIG. 8A and FIG. 8B, in this embodiment, the first trusted attestation proxy is responsible for attesting a trusted state of a second trusted attestation proxy. The second trusted attestation proxy is responsible for attesting a trusted state of a second to-be-attested object. In this example, the plurality of baseline values include a second baseline value and a third baseline value. For descriptions of the second baseline value and the third baseline value, refer to step 801. Details are not described again.

For step 901 to step 910, refer to related descriptions of step 802 to step 810 shown in FIG. 8A and FIG. 8B. Details are not described again.

Step 911: The first trusted attestation proxy sends a third baseline value to the second trusted attestation proxy through the second secure channel.

Step 912: The second trusted attestation proxy receives the third baseline value through the second secure channel.

Step 913: The second trusted attestation proxy attests a trusted state of the second to-be-attested object.

The second trusted attestation proxy attests the trusted state of the second to-be-attested object based on the third baseline value corresponding to the second to-be-attested object and the second measured value. For a specific process, refer to the process of attesting the first to-be-attested object in step 512. Details are not described again.

By using the method shown in this embodiment, the first trusted attestation proxy in a trusted state undertakes attestation of the second trusted attestation proxy. The second trusted attestation proxy is responsible for attesting the trusted state of the second to-be-attested object. An amount of information processed by a target network device is effectively reduced. In addition, a risk of tampering with the downstream network device when the target network device is illegally tampered with can be further avoided.

An embodiment of this application provides a network device. The network device 64 in the communication system shown in FIG. 6 is used as an example. The network device 64 includes a trusted attestation proxy 641 and one or more to-be-attested objects connected to the trusted attestation proxy 641. For descriptions of the trusted attestation proxy 641 and the to-be-attested object, refer to FIG. 1 to FIG. 4. Details are not described again.

It is assumed that the network device 64 shown in this embodiment is the target network device shown in the foregoing method embodiments. In FIG. 4, the trusted attestation proxy 641 is configured to perform step 401, step 402, step 405, and step 406. In FIG. 5A and FIG. 5B, the trusted attestation proxy 641 is configured to perform step 501 to step 504, step 507 to step 509, step 511, and step 512. A to-be-attested object 642 is used as an example. The to-be-attested object 642 is configured to perform step 510. In FIG. 8A and FIG. 8B, the trusted attestation proxy 641 is configured to perform step 802, step 803, step 806 to step 809, step 812, and step 813. In FIG. 9A and FIG. 9B, the trusted attestation proxy 641 is configured to perform step 902, step 903, step 906 to step 909, and step 911.

It is assumed that the network device 64 shown in this embodiment is the downstream network device shown in the foregoing method embodiments. In FIG. 8A and FIG. 8B, the trusted attestation proxy 641 is configured to perform step 804, step 805, step 810, and step 811. In FIG. 9A and FIG. 9B, the trusted attestation proxy 641 is configured to perform step 904, step 905, step 910, step 912, and step 913.

It is assumed that the network device 64 shown in this embodiment is the upstream device in the foregoing method embodiments. In this example, a target network device 66 is further connected to one or more downstream network devices. In FIG. 4, the trusted attestation proxy 641 for the upstream device 64 is configured to perform step 403 and step 404. In FIG. 5A and FIG. 5B, the trusted attestation proxy 641 is configured to perform step 501, step 505, and step 506. In FIG. 8A and FIG. 8B, the trusted attestation proxy 641 is configured to perform step 801. In FIG. 9A and FIG. 9B, the trusted attestation proxy 641 is configured to perform step 901.

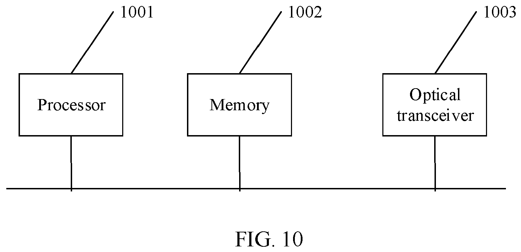

This application provides an attestation server. FIG. 10 is a structural diagram of an embodiment of an attestation server according to the present invention. As shown in FIG. 10, the attestation server includes a processor 1001, a memory 1002, and an optical transceiver 1003. The processor 1001 is interconnected with the memory 1002 and the optical transceiver 1003 by using a line.

The optical transceiver 1003 is configured to perform transceiver-related operations between the optical transceiver 1003 and a target network device shown in any one of the foregoing method embodiments. The memory 1002 is configured to store program instructions and data; and the processor 1001 executes the program instructions and the data, to complete processing operations shown in any one of the foregoing method embodiments. For details, refer to the foregoing method embodiments. Details are not described again.

The foregoing embodiments are merely intended for describing the technical solutions of the present invention, rather than limiting the present invention. Although the present invention is described in detail with reference to the foregoing embodiments, a person of ordinary skill in the art should understand that modifications may still be made to the technical solutions described in the foregoing embodiments may still be made to some technical features thereof, without departing from the scope of the technical solutions of embodiments of the present invention.

## Claims

1. A trusted-state attesting method, wherein the method is applied to a network device comprising a first trusted attestation proxy for proxying an attestation server, the network device is connected between an upstream device and a downstream network device, the upstream device is one or more devices connected between the network device and the attestation server or the attestation server, the downstream network device is one or more devices that need to be indirectly connected to the attestation server via the network device, and the method comprises:
measuring (401) the first trusted attestation proxy for the network device to obtain a first proxy measured value, wherein the first proxy measured value is for enabling the upstream device to attest a trusted state of the first trusted attestation proxy;
sending (402) the first proxy measured value to the upstream device; and
receiving (405) at least one baseline value from the upstream device if the upstream device determines that the first trusted attestation proxy is in the trusted state, wherein at least a part of the at least one baseline value is used to attest a trusted state of the downstream network device;
wherein the at least one baseline value comprises a second baseline value, the second baseline value corresponds to a second trusted attestation proxy for the downstream network device, and after the receiving (405) at least one baseline value from the upstream device, the method further comprises:
receiving a second proxy measured value from the downstream network device, wherein the second proxy measured value is used to attest a trusted state of the second trusted attestation proxy; and
attesting the trusted state of the second trusted attestation proxy based on the second baseline value and the second proxy measured value.

2. The method according to claim 1, wherein the network device comprises at least one first to-be-attested object connected to the first trusted attestation proxy, and the method further comprises:
obtaining a first measured value of each of the at least one first to-be-attested object, wherein the first measured value is used to attest a trusted state of the first to-be-attested object; and
the at least one baseline value comprises a first baseline value corresponding to the first to-be-attested object, and after the receiving at least one baseline value from the upstream device, the method further comprises:
attesting the trusted state of the first to-be-attested object based on the first baseline value corresponding to the first to-be-attested object and the first measured value.

3. The method according to claim 2, wherein after the obtaining a first measured value of each of the at least one first to-be-attested object, the method further comprises:
sending the first measured value to the upstream device.

4. The method according to any one of claims 1 to 3, wherein the at least one baseline value comprises a third baseline value, the third baseline value corresponds to a second to-be-attested object of the downstream network device, and after the receiving at least one baseline value from the upstream device, the method further comprises:
receiving a second measured value from the downstream network device, wherein the second measured value is used to attest a trusted state of the second to-be-attested object; and
attesting the trusted state of the second to-be-attested object based on the third baseline value corresponding to the second to-be-attested object and the second measured value.

5. The method according to any one of claims 1 to 3, wherein the at least one baseline value comprises a third baseline value, the third baseline value corresponds to a second to-be-attested object of the downstream network device, and after the receiving at least one baseline value from the upstream device, the method further comprises:
sending the third baseline value to the downstream network device.

6. The method according to claim 2 or 3, wherein the first to-be-attested object and the first trusted attestation proxy are two cards; or the first to-be-attested object and the first trusted attestation proxy are two virtual machines; or the first to-be-attested object and the first trusted attestation proxy are any two of a virtual machine, a network functions virtualization management and orchestration system, or a network functions virtualization infrastructure layer.

7. A trusted-state attesting method, wherein the method is applied to a system including an upstream device, a network device, and a downstream network device, the upstream device, the network device, and the downstream network device are sequentially connected, wherein the network device comprises a first trusted attestation proxy for proxying an attestation server, the upstream device is one or more devices connected between the network device and the attestation server or the attestation server, the downstream network device is one or more devices that need to be indirectly connected to the attestation server via the network device, and the method comprises:
receiving (403), by the upstream device, a first proxy measured value from the network device, wherein the first proxy measured value is used to attest a trusted state of the first trusted attestation proxy for the network device;
attesting, by the upstream device, based on the first proxy measured value, whether the first trusted attestation proxy is in the trusted state; and
sending (404), by the upstream device, at least one baseline value to the network device when it is determined that the first trusted attestation proxy is in the trusted state, wherein at least a part of the at least one baseline value is used to attest a trusted state of the downstream network device;
receiving (405), by the network device, the at least one baseline value from the upstream device,
wherein the at least one baseline value comprises a second baseline value, the second baseline value corresponds to a second trusted attestation proxy for the downstream network device, and after the receiving (405) at least one baseline value from the upstream device, the method further comprises:
receiving, by the network device, a second proxy measured value from the downstream network device, wherein the second proxy measured value is used to attest a trusted state of the second trusted attestation proxy; and
attesting (406), by the network device, the trusted state of the second trusted attestation proxy based on the second baseline value and the second proxy measured value.

8. The method according to claim 7, wherein the at least one baseline value comprises a first baseline value corresponding to a first to-be-attested object of the network device.

9. The method according to claim 7 or 8, wherein after the sending at least one baseline value to the network device, the method further comprises:
receiving, by the upstream device, a first measured value from the network device, wherein the first measured value is used to attest a trusted state of the first to-be-attested object of the network device; and
attesting, by the upstream device, the trusted state of the first to-be-attested object based on the first baseline value corresponding to the first to-be-attested object and the first measured value.

10. The method according to any one of claims 7 to 9, wherein the at least one baseline value comprises a third baseline value, and the third baseline value corresponds to a second to-be-attested object of the downstream network device, and after the receiving at least one baseline value from the upstream device, the method further comprises:
sending the third baseline value to the downstream network device.

11. A network device, wherein the network device is connected between an upstream device and a downstream network device, the upstream device is an upstream network device of the network device or an attestation server, the network device comprises a first trusted attestation proxy, and the first trusted attestation proxy is configured to perform the trusted-state attesting method according to any one of claims 1 to 6.

## Patentansprüche

1. Verfahren zum Bestätigen eines vertrauenswürdigen Zustands, wobei das Verfahren auf eine Netzwerkvorrichtung angewendet wird, die einen ersten vertrauenswürdigen Bestätigungsproxy zum Proxying eines Bestätigungsservers umfasst, die Netzwerkvorrichtung zwischen einer Upstream-Vorrichtung und einer Downstream-Netzwerkvorrichtung verbunden ist, die Upstream-Vorrichtung eine oder mehrere Vorrichtungen, die zwischen der Netzwerkvorrichtung und dem Bestätigungsserver angeschlossen sind, oder der Bestätigungsserver ist, die Downstream-Netzwerkvorrichtung eine oder mehrere Vorrichtungen sind, die indirekt mit dem Bestätigungsserver über die Netzwerkvorrichtung zu verbinden sind, und das Verfahren Folgendes umfasst:
Messen (401) des ersten vertrauenswürdigen Bestätigungsproxys für die Netzwerkvorrichtung, um einen ersten Proxy-Messwert zu erlangen, wobei der erste Proxy-Messwert dazu dient, die Upstream-Vorrichtung in die Lage zu versetzen, einen vertrauenswürdigen Zustand des ersten vertrauenswürdigen Bestätigungsproxys zu bestätigen;
Senden (402) des ersten Proxy-Messwerts an die Upstream-Vorrichtung; und
Empfangen (405) mindestens eines Basiswerts von der Upstream-Vorrichtung, wenn die Upstream-Vorrichtung bestimmt, dass sich der erste vertrauenswürdige Bestätigungsproxy in dem vertrauenswürdigen Zustand befindet, wobei mindestens ein Teil des mindestens einen Basiswerts dazu verwendet wird, einen vertrauenswürdigen Zustand der Downstream-Netzwerkvorrichtung zu bestätigen;
wobei der mindestens eine Basiswert einen zweiten Basiswert umfasst, der zweite Basiswert einem zweiten vertrauenswürdigen Bestätigungsproxy für die Downstream-Netzwerkvorrichtung entspricht und das Verfahren nach dem Empfangen (405) mindestens eines Basiswerts von der Upstream-Vorrichtung ferner Folgendes umfasst:
Empfangen eines zweiten Proxy-Messwerts von der Downstream-Netzwerkvorrichtung, wobei der zweite Proxy-Messwert dazu verwendet wird, einen vertrauenswürdigen Zustand des zweiten vertrauenswürdigen Bestätigungsproxys zu bestätigen; und
Bestätigen des vertrauenswürdigen Zustands des zweiten vertrauenswürdigen Bestätigungsproxys basierend auf dem zweiten Basiswert und dem zweiten Proxy-Messwert.

2. Verfahren nach Anspruch 1, wobei die Netzwerkvorrichtung mindestens ein erstes zu bestätigendes Objekt umfasst, das mit dem ersten vertrauenswürdigen Bestätigungsproxy verbunden ist, und das Verfahren ferner Folgendes umfasst:
Erlangen eines ersten Messwerts jedes des mindestens einen ersten zu bestätigenden Objekts, wobei der erste Messwert dazu verwendet wird, einen vertrauenswürdigen Zustand des ersten zu bestätigenden Objekts zu bestätigen; und
der mindestens eine Basiswert einen ersten Basiswert umfasst, der dem ersten zu bestätigenden Objekt entspricht, und das Verfahren nach dem Empfangen mindestens eines Basiswerts von der Upstream-Vorrichtung ferner Folgendes umfasst:
Bestätigen des vertrauenswürdigen Zustands des ersten zu bestätigenden Objekts basierend auf dem ersten Basiswert, der dem ersten zu bestätigenden Objekt entspricht, und dem ersten Messwert.

3. Verfahren nach Anspruch 2, wobei das Verfahren nach dem Erlangen eines ersten Messwerts jedes des mindestens einen ersten zu bestätigenden Objekts ferner Folgendes umfasst:
Senden des ersten Messwerts an die Upstream-Vorrichtung.

4. Verfahren nach einem der Ansprüche 1 bis 3, wobei der mindestens eine Basiswert einen dritten Basiswert umfasst, der dritte Basiswert einem zweiten zu bestätigenden Objekt der Downstream-Netzwerkvorrichtung entspricht und das Verfahren nach dem Empfangen mindestens eines Basiswerts von der Upstream-Vorrichtung Folgendes umfasst:
Empfangen eines zweiten Messwerts von der Downstream-Netzwerkvorrichtung, wobei der zweite Messwert dazu verwendet wird, einen vertrauenswürdigen Zustand des zweiten zu bestätigenden Objekts zu bestätigen; und
Bestätigen des vertrauenswürdigen Zustands des zweiten zu bestätigenden Objekts basierend auf dem dritten Basiswert, der dem zweiten zu bestätigenden Objekt entspricht, und dem zweiten Messwert.

5. Verfahren nach einem der Ansprüche 1 bis 3, wobei der mindestens eine Basiswert einen dritten Basiswert umfasst, der dritte Basiswert einem zweiten zu bestätigenden Objekt der Downstream-Netzwerkvorrichtung entspricht und das Verfahren nach dem Empfangen mindestens eines Basiswerts von der Upstream-Vorrichtung Folgendes umfasst:
Senden des dritten Basiswerts an die Downstream-Netzwerkvorrichtung.

6. Verfahren nach Anspruch 2 oder 3, wobei das erste zu bestätigende Objekt und der erste vertrauenswürdige Bestätigungsproxy zwei Karten sind; oder das erste zu bestätigende Objekt und der erste vertrauenswürdige Bestätigungsproxy zwei virtuelle Maschinen sind; oder das erste zu bestätigende Objekt und der erste vertrauenswürdige Bestätigungsproxy zwei beliebige aus einer virtuellen Maschine, einem Network-Functions-Virtualization-Management- und - Orchestrierungssystem oder einer Network-Functions-Virtualization-Infrastrukturschicht sind.

7. Verfahren zum Bestätigen eines vertrauenswürdigen Zustands, wobei das Verfahren auf ein System angewendet wird, das eine Upstream-Vorrichtung, eine Netzwerkvorrichtung und eine Downstream-Netzwerkvorrichtung beinhaltet, wobei die Upstream-Vorrichtung, die Netzwerkvorrichtung und die Downstream-Netzwerkvorrichtung sequentiell verbunden sind, wobei die Netzwerkvorrichtung einen ersten vertrauenswürdigen Bestätigungsproxy zum Proxying eines Bestätigungsservers umfasst, die Upstream-Vorrichtung eine oder mehrere Vorrichtungen, die zwischen der Netzwerkvorrichtung und dem Bestätigungsserver angeschlossen sind, oder der Bestätigungsserver ist, die Downstream-Netzwerkvorrichtung eine oder mehrere Vorrichtungen sind, die indirekt mit dem Bestätigungsserver über die Netzwerkvorrichtung zu verbinden sind, und das Verfahren Folgendes umfasst:
Empfangen (403), durch die Upstream-Vorrichtung, eines ersten Proxy-Messwerts von der Netzwerkvorrichtung, wobei der erste Proxy-Messwert dazu verwendet wird, einen vertrauenswürdigen Zustand des ersten vertrauenswürdigen Bestätigungsproxys für die Netzwerkvorrichtung zu bestätigen;
Bestätigen, durch die Upstream-Vorrichtung, basierend auf dem ersten Proxy-Messwert, ob sich der erste vertrauenswürdige Bestätigungsproxy in dem vertrauenswürdigen Zustand befindet; und
Senden (404), durch die Upstream-Vorrichtung, mindestens eines Basiswerts an die Netzwerkvorrichtung, wenn bestimmt wird, dass sich der erste vertrauenswürdige Bestätigungsproxy in dem vertrauenswürdigen Zustand befindet, wobei mindestens ein Teil des mindestens einen Basiswerts dazu verwendet wird, einen vertrauenswürdigen Zustand der Downstream-Netzwerkvorrichtung zu bestätigen;
Empfangen (405), durch die Netzwerkvorrichtung, des mindestens einen Basiswerts von der Upstream-Vorrichtung;
wobei der mindestens eine Basiswert einen zweiten Basiswert umfasst, der zweite Basiswert einem zweiten vertrauenswürdigen Bestätigungsproxy für die Downstream-Netzwerkvorrichtung entspricht und das Verfahren nach dem Empfangen (405) mindestens eines Basiswerts von der Upstream-Vorrichtung ferner Folgendes umfasst:
Empfangen, durch die Netzwerkvorrichtung, eines zweiten Proxy-Messwerts von der Downstream-Netzwerkvorrichtung, wobei der zweite Proxy-Messwert dazu verwendet wird, einen vertrauenswürdigen Zustand des zweiten vertrauenswürdigen Bestätigungsproxys zu bestätigen; und
Bestätigen (406), durch die Netzwerkvorrichtung, des vertrauenswürdigen Zustands des zweiten vertrauenswürdigen Bestätigungsproxys basierend auf dem zweiten Basiswert und dem zweiten Proxy-Messwert.

8. Verfahren nach Anspruch 7, wobei der mindestens eine Basiswert einen ersten Basiswert umfasst, der einem ersten zu bestätigenden Objekt der Netzwerkvorrichtung entspricht.

9. Verfahren nach Anspruch 7 oder 8, wobei das Verfahren nach dem Senden mindestens eines Basiswerts an die Netzwerkvorrichtung, ferner Folgendes umfasst:
Empfangen, durch die Upstream-Vorrichtung, eines ersten Messwerts von der Netzwerkvorrichtung, wobei der erste Messwert dazu verwendet wird, einen vertrauenswürdigen Zustand des ersten zu bestätigenden Objekts der Netzwerkvorrichtung zu bestätigen; und
Bestätigen, durch die Upstream-Vorrichtung, des vertrauenswürdigen Zustands des ersten zu bestätigenden Objekts basierend auf dem ersten Basiswert, der dem ersten zu bestätigenden Objekt entspricht, und dem ersten Messwert.

10. Verfahren nach einem der Ansprüche 7 bis 9, wobei der mindestens eine Basiswert einen dritten Basiswert umfasst und der dritte Basiswert einem zweiten zu bestätigenden Objekt der Downstream-Netzwerkvorrichtung entspricht und das Verfahren nach dem Empfangen mindestens eines Basiswerts von der Upstream-Vorrichtung Folgendes umfasst:
Senden des dritten Basiswerts an die Downstream-Netzwerkvorrichtung.

11. Netzwerkvorrichtung, wobei die Netzwerkvorrichtung zwischen einer Upstream-Vorrichtung und einer Downstream-Netzwerkvorrichtung verbunden ist, wobei die Upstream-Vorrichtung eine Upstream-Netzwerkvorrichtung der Netzwerkvorrichtung oder ein Bestätigungsserver ist, die Netzwerkvorrichtung einen ersten vertrauenswürdigen Bestätigungsproxy umfasst und der erste vertrauenswürdige Bestätigungsproxy dazu konfiguriert ist, das Verfahren zum Bestätigen eines vertrauenswürdigen Zustands nach einem der Ansprüche 1 bis 6 durchzuführen.

## Revendications

1. Procédé d'attestation d'état de confiance, dans lequel le procédé est appliqué à un dispositif réseau comprenant un premier proxy d'attestation de confiance servant de proxy à un serveur d'attestation, le dispositif réseau est connecté entre un dispositif en amont et un dispositif réseau en aval, le dispositif en amont est un ou plusieurs dispositifs connectés entre le dispositif réseau et le serveur d'attestation, ou le serveur d'attestation lui-même, le dispositif réseau en aval est un ou plusieurs dispositifs devant être connectés indirectement au serveur d'attestation par le biais du dispositif réseau, et le procédé comprend :
la mesure (401) du premier proxy d'attestation de confiance pour le dispositif réseau pour obtenir une première valeur mesurée par proxy, dans lequel la première valeur mesurée par proxy sert à permettre au dispositif en amont d'attester d'un état de confiance du premier proxy d'attestation de confiance ;
l'envoi (402) de la première valeur mesurée par proxy au dispositif en amont ; et
la réception (405) d'au moins une valeur de référence du dispositif en amont si le dispositif en amont détermine que le premier proxy d'attestation de confiance est dans l'état de confiance, dans lequel au moins une partie de l'au moins une valeur de référence est utilisée pour attester d'un état de confiance du dispositif réseau en aval ;
dans lequel l'au moins une valeur de référence comprend une deuxième valeur de référence, la deuxième valeur de référence correspond à un second proxy d'attestation de confiance pour le dispositif réseau en aval, et après la réception (405) d'au moins une valeur de référence à partir du dispositif en amont, le procédé comprend également :
la réception d'une deuxième valeur mesurée par proxy provenant du dispositif réseau en aval, dans lequel la deuxième valeur mesurée par proxy est utilisée pour attester d'un état de confiance du second proxy d'attestation de confiance ; et
l'attestation de l'état de confiance du second proxy d'attestation de confiance sur la base de la deuxième valeur de référence et de la deuxième valeur mesurée par proxy.

2. Procédé selon la revendication 1, dans lequel le dispositif réseau comprend au moins un premier objet à attester connecté au premier proxy d'attestation de confiance, et le procédé comprend également :
l'obtention d'une première valeur mesurée de chacun de l'au moins un premier objet à attester, dans lequel la première valeur mesurée est utilisée pour attester 'un état de confiance du premier objet à attester ; et
l'au moins une valeur de référence comprend une première valeur de référence correspondant au premier objet à attester, et après la réception d'au moins une valeur de référence à partir du dispositif en amont, le procédé comprend également :
l'attestation de l'état de confiance du premier objet à attester sur la base de la première valeur de référence correspondant au premier objet à attester et de la première valeur mesurée.

3. Procédé selon la revendication 2, dans lequel, après l'obtention d'une première valeur mesurée de chacun de l'au moins un premier objet à attester, le procédé comprend également :
l'envoi de la première valeur mesurée au dispositif en amont.

4. Procédé selon l'une quelconque des revendications 1 à 3, dans lequel l'au moins une valeur de référence comprend une troisième valeur de référence, la troisième valeur de référence correspond à un second objet à attester du dispositif réseau en aval, et après la réception d'au moins une valeur de référence du dispositif en amont, le procédé comprend également :
la réception d'une deuxième valeur mesurée provenant du dispositif réseau en aval, dans lequel la deuxième valeur mesurée est utilisée pour attester d'un état de confiance du second objet à attester ; et
l'attestation de l'état de confiance du second objet à attester sur la base de la troisième valeur de référence correspondant au second objet à attester et de la deuxième valeur mesurée.

5. Procédé selon l'une quelconque des revendications 1 à 3, dans lequel l'au moins une valeur de référence comprend une troisième valeur de référence, la troisième valeur de référence correspond à un second objet à attester du dispositif réseau en aval, et après la réception d'au moins une valeur de référence du dispositif en amont, le procédé comprend également :
l'envoi de la troisième valeur de référence au dispositif réseau en aval.

6. Procédé selon la revendication 2 ou 3, dans lequel le premier objet à attester et le premier proxy d'attestation de confiance sont deux cartes ; ou le premier objet à attester et le premier proxy d'attestation de confiance sont deux machines virtuelles ; ou le premier objet à attester et le premier proxy d'attestation de confiance sont deux éléments quelconques parmi une machine virtuelle, un système de gestion et d'orchestration de la virtualisation des fonctions réseau ou une couche d'infrastructure de virtualisation des fonctions réseau.

7. Procédé d'attestation d'état de confiance, dans lequel le procédé est appliqué à un système comportant un dispositif en amont, un dispositif réseau, et un dispositif réseau en aval, le dispositif en amont, le dispositif réseau, et le dispositif réseau en aval sont séquentiellement connectés, dans lequel le dispositif réseau comprend un premier proxy d'attestation de confiance servant de proxy à un serveur d'attestation, le dispositif en amont est un ou plusieurs dispositifs connectés entre le dispositif réseau et le serveur d'attestation ou le serveur d'attestation lui-même, le dispositif réseau en aval est un ou plusieurs dispositifs devant être connectés indirectement au serveur d'attestation par le biais du dispositif réseau, et le procédé comprend :
la réception (403), par le dispositif en amont, d'une première valeur mesurée par proxy provenant du dispositif réseau, dans lequel la première valeur mesurée par proxy est utilisée pour attester d'un état de confiance du premier proxy d'attestation de confiance pour le dispositif réseau ;
le fait d'attester, par le dispositif en amont, sur la base de la première valeur mesurée par proxy, si le premier proxy d'attestation de confiance est dans l'état de confiance ; et
l'envoi (404), par le dispositif en amont, d'au moins une valeur de référence au dispositif réseau lorsqu'il est déterminé que le premier proxy d'attestation de confiance est dans l'état de confiance, dans lequel au moins une partie de l'au moins une valeur de référence est utilisée pour attester d'un état de confiance du dispositif réseau en aval ;
la réception (405), par le dispositif réseau, de l'au moins une valeur de référence provenant du dispositif en amont ;
dans lequel l'au moins une valeur de référence comprend une deuxième valeur de référence, la deuxième valeur de référence correspond à un second proxy d'attestation de confiance pour le dispositif réseau en aval, et après la réception (405) d'au moins une valeur de référence à partir du dispositif en amont, le procédé comprend également :
la réception, par le dispositif réseau, d'une deuxième valeur mesurée par proxy provenant du dispositif réseau en aval, dans lequel la deuxième valeur mesurée par proxy est utilisée pour attester d'un état de confiance du second proxy d'attestation de confiance ; et
l'attestation (406), par le dispositif réseau, de l'état de confiance du second proxy d'attestation de confiance sur la base de la deuxième valeur de référence et de la deuxième valeur mesurée par proxy.

8. Procédé selon la revendication 7, dans lequel l'au moins une valeur de référence comprend une première valeur de référence correspondant à un premier objet à attester du dispositif réseau.

9. Procédé selon la revendication 7 ou 8, dans lequel, après l'envoi d'au moins une valeur de référence au dispositif réseau, le procédé comprend également :
la réception, par le dispositif en amont, d'une première valeur mesurée provenant du dispositif réseau, dans lequel la première valeur mesurée est utilisée pour attester d'un état de confiance du premier objet à attester du dispositif réseau ; et
l'attestation, par le dispositif en amont, de l'état de confiance du premier objet à attester sur la base de la première valeur de référence correspondant au premier objet à attester et de la première valeur mesurée.

10. Procédé selon l'une quelconque des revendications 7 à 9, dans lequel l'au moins une valeur de référence comprend une troisième valeur de référence, et la troisième valeur de référence correspond à un second objet à attester du dispositif réseau en aval, et après la réception d'au moins une valeur de référence du dispositif en amont, le procédé comprend également :
l'envoi de la troisième valeur de référence au dispositif réseau en aval.

11. Dispositif réseau, dans lequel le dispositif réseau est connecté entre un dispositif en amont et un dispositif réseau en aval, le dispositif en amont est un dispositif réseau en amont du dispositif réseau ou un serveur d'attestation, le dispositif réseau comprend un premier proxy d'attestation de confiance, et le premier proxy d'attestation de confiance est configuré pour réaliser le procédé d'attestation d'état de confiance selon l'une quelconque des revendications 1 à 6.
